# EUROPEAN PATENT APPLICATION

(11) **EP 4 398 411 A1**
(43) Date of publication of application: **10.07.2024**
(21) Application number: 22941206.9
(22) Date of filing: 13.05.2022
(51) Int. Cl.: H01M 50/572, H01M 50/471, H01M 10/04

(54) **ELECTRODE ASSEMBLY, BATTERY CELL, BATTERY, AND ELECTRIC DEVICE**

(71) Applicant: Contemporary Amperex Technology Co., Limited, Ningde, Fujian 352100 (CN)
(72) Inventor: TANG, Huaichao, Ningde, Fujian 352100 (CN); CHEN, Qianjun, Ningde, Fujian 352100 (CN); LI, Ting, Ningde, Fujian 352100 (CN)
(74) Representative: Laufhütte, Dieter
(86) International application number: PCT/CN2022/092828
(87) International publication number: WO 2023/216254

(57) **Abstract**

Embodiments of the present application provide an electrode assembly, a battery cell, a battery, and an electrical device, belonging to the field of battery technology. The electrode assembly includes a cladding layer, a plurality of stacked electrode sheets, and a separator disposed between the two adjacent electrode sheets. The electrode sheet includes an active material region and an inactive material region, the active material regions of the plurality of electrode sheets and the separator are stacked to form a body portion, and the inactive material regions of the plurality of electrode sheets are stacked to form a tab portion protruding from the body portion. The cladding layer at least clads a circumference of the body portion to cover an edge of the active material region. This structure enables the cladding layer to cover an edge of the active material region of the electrode sheet, thereby cladding burrs on the edge of the active material region, reducing the risk of short circuits between positive and negative electrodes due to puncture of the separator by the burrs, and effectively improving the safety of a battery cell.

## Description

### Technical Field

The present application relates to the field of battery technology, and in particular, to an electrode assembly, a battery cell, a battery, and an electrical device.

### Background Art

With the development of new energy technology, batteries are increasingly widely used, such as in mobile phones, notebook computers, scooters, electric vehicles, electric aircraft, electric boats, electric toy cars, electric toy boats, electric toy planes, and electric tools.

Both the performance and safety of battery cells are required to be considered in the battery technology. Therefore, how to improve the safety of battery cells is an urgent problem to be solved in the battery technology.

### Summary

Embodiments of the present application provide an electrode assembly, a battery cell, a battery, and an electrical device, where the safety of the battery cell can be effectively improved.

First, an embodiment of the present application provides an electrode assembly, including a cladding layer, a plurality of stacked electrode sheets and a separator disposed between two adjacent electrode sheets, where the electrode sheet includes an active material region and an inactive material region, the active material regions of the plurality of electrode sheets and the separator are stacked to form a body portion, and the inactive material regions of the plurality of electrode sheets are stacked to form a tab portion protruding from the body portion; and the cladding layer at least clads a circumference of the body portion to cover an edge of the active material region.

In the foregoing technical solution, the cladding layer clads the circumference of the main body portion to cover the edge of the active material region of the electrode sheet, thereby cladding burrs on the edge of the active material region, reducing the risk of short circuits between positive and negative electrodes due to puncture of the separator by the burrs, and effectively improving the safety of a battery cell.

In some embodiments, the cladding layer further clads a circumference of the tab portion to cover an edge of the inactive material region. The cladding portion covers the edge of the inactive material region, thereby reducing the risk of short circuits between positive and negative electrodes due to puncture of the separator by burrs at the edge of the inactive material region.

In some embodiments, the cladding layer includes a first cladding portion and a second cladding portion, where the first cladding portion clads the circumference of the body portion to cover the edge of the active material region; and the second cladding portion encloses, together with the first cladding portion, a closed structure extending along a closed trajectory, and the second cladding portion clads the circumference of the tab portion to cover the edge of the inactive material region. The body portion and the tab portion are clad by the first cladding portion and the second cladding portion separately to cover the edges of the active material region and inactive material region of the electrode sheet. The second cladding portion and the first cladding portion jointly enclose the closed structure extending along the closed trajectory, so that the cladding layer is less prone to detachment to achieve better protection.

In some embodiments, the first cladding portion has a thickness of 0.01-100 µm; and/or the second cladding portion has a thickness of 0.01-100 µm. By setting the first cladding portion and/or second cladding portion within an appropriate range, the protection effect will not fail due to the too thin first cladding portion and/or second cladding portion, and the energy density of the battery cell will not be affected due to the occupation of excessive space by the too thick first cladding portion and/or second cladding portion.

In some embodiments, the first cladding portion and the second cladding portion are integrally formed. The first cladding portion and the second cladding portion that are integrally formed have good connecting strength and are not easily separated.

In some embodiments, the plurality of electrode sheets include a plurality of first electrode sheets and a plurality of second electrode sheets, the first electrode sheets and the second electrode sheets have opposite polarities and are alternated, and the separator is configured to insulate the first electrode sheets and the second electrode sheets; and the inactive material regions of the plurality of first electrode sheets are stacked to form one tab portion protruding from the body portion, while the inactive material regions of the plurality of second electrode sheets are stacked to form the other tab portion protruding from the body portion. The electrode assembly of this structure is a stacked electrode assembly, which has advantages of low internal resistance, uniform electric field distribution, and good power performance.

In some embodiments, the active material region of the first electrode sheet has an excess portion exceeding the edge of the active material region of the second electrode sheet; in a stacking direction of the first electrode sheet and the second electrode sheet, a first accommodating gap is formed between two adjacent excess portions; and the cladding layer has a first extension portion, the first extension portion corresponds to the first accommodating gap, and the first extension portion is accommodated in the first accommodating gap. In this case, the excess portions of the two adjacent first electrode sheets well limit the first extension portion, thereby improving firmness of the cladding layer cladding the circumference of the body portion.

In some embodiments, in a length direction of the body portion, at least one end of the active material region of the first electrode sheet exceeds the edge of the active material region of the second electrode sheet. In this case, at least one end of the body portion in the length direction will form a first accommodating gap to accommodate the first extension portion of the cladding layer in the length direction of the body portion.

In some embodiments, in a width direction of the body portion, at least one end of the active material region of the first electrode sheet exceeds the edge of the active material region of the second electrode sheet. In this case, at least one end of the body portion in the width direction will form a first accommodating gap to accommodate the first extension portion of the cladding layer in the width direction of the body portion.

In some embodiments, the separator has a second extension portion, and the second extension portion is accommodated in the first accommodating gap. In this case, the portion of the separator (the second extension portion) extending into the first accommodating gap enables the separator to better separate the first electrode sheet and the second electrode sheet, so as to reduce the risk of overlap between the first electrode sheet and the second electrode sheet.

In some embodiments, the first extension portion is located between the two second extension portions in the first accommodating gap. The first extension portion can limit the two second extension portions, so the two second extension portions of the separator are less prone to bending or wrinkling in the first accommodating gap.

In some embodiments, the two second extension portions in the first accommodating gap separate the first accommodating gap into three first separation gaps, the three first separation gaps are spaced in the stacking direction of the first electrode sheet and the second electrode sheet, and each of the first separation gaps accommodates a portion of the first extension portion. This structure enables the two second extension portions of the separator to be less prone to bending or wrinkling in the first accommodating gap. On the other hand, the first extension portion fills the space not occupied by the second extension portions in the first accommodating gap, thereby improving the firmness of the cladding layer.

In some embodiments, the active material region of the first electrode sheet includes a first body region and a first thinned region, the active material region of the second electrode sheet includes a second body region and a second thinned region, and in the width direction of the body portion, the first thinned region is disposed in at least one end of the first body region, and the second thinned region is disposed in at least at one end of the second body region; in the stacking direction of the first electrode sheet and the second electrode sheet, the first body region is opposite to the second body region, the first thinned region is opposite to the second thinned region, and a second accommodating gap is formed between the first thinned region and the second thinned region; and the cladding layer has a third extension portion, and the third extension portion is accommodated in the second accommodating gap. In this case, the first thinned region of the first electrode sheet and the second thinned region of the second electrode sheet both well limit the third extension portion, thereby improving the firmness of the cladding layer cladding the circumference of the body portion.

In some embodiments, the separator has a fourth extension portion, and the fourth extension portion is accommodated in the second accommodating gap. The separator can better separate the first electrode sheet and the second electrode sheet, thereby reducing the risk of overlap between the first electrode sheet and the second electrode sheet.

In some embodiments, the third extension portion is located between the fourth extension portion and the second thinned region. The third extension portion limits the fourth extension portion, so the fourth extension portion is less prone to bending or wrinkling in the second accommodating gap.

In some embodiments, the fourth extension portion separates the second accommodating gap into two second separation gaps, the two second separation gaps are spaced in the stacking direction of the first electrode sheet and the second electrode sheet, and each of the second separation gaps accommodates a portion of the third extension portion. This structure enables the fourth extension portion of the separator to be less prone to bending or wrinkling in the second accommodating gap. On the other hand, the third extension portion fills the space not occupied by the fourth extension portion of the separator in the second accommodating gap, thereby improving the firmness of the cladding layer cladding the circumference of the body portion.

In some embodiments, the active material region has an active material detachment region, which is close to the edge of the active material region; and the cladding layer includes a covering portion, which covers the active material detachment region. The active material detachment region is covered by the covering portion to avoid exposure of a base material in the active material region.

In some embodiments, the cladding layer is made of an insulating material. The cladding layer has insulation performance to reduce the risk of short circuits between positive and negative electrodes in the presence of the cladding layer.

In some embodiments, the cladding layer is an inorganic cladding layer or a composite cladding layer containing an inorganic material.

In a second aspect, an embodiment of the present application provides a battery cell, including a shell and the electrode assembly provided by any of the foregoing embodiments in the first aspect, where the electrode assembly is accommodated in the shell.

In a third aspect, an embodiment of the present application provides a battery, including a box and the battery cell provided by any of the foregoing embodiments in the second aspect, where the battery cell is accommodated in the box.

In a fourth aspect, an embodiment of the present application provides an electrical device, including the battery provided by any of the embodiments in the third aspect.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of an electrode assembly according to some embodiments of the present application;
FIG. 5 is a cross-sectional view taken along line A-A on the electrode assembly shown in FIG. 4;
FIG. 6 is a cross-sectional view of the electrode assembly according to some embodiments of the present application;
FIG. 7 is a schematic structural diagram of the electrode assembly shown in FIG. 6 after a cladding layer is removed;
FIG. 8 is a cross-sectional view taken along line B-B in FIG. 6;
FIG. 9 is a cross-sectional view of the electrode assembly according to other embodiments of the present application;
FIG. 10 is a partially enlarged view of position C of the electrode assembly shown in FIG. 9;
FIG. 11 is a partially enlarged view of the electrode assembly according to still other embodiments of the present application;
FIG. 12 is a partially enlarged view of the electrode assembly according to still other embodiments of the present application;
FIG. 13 is a schematic structural diagram of the electrode assembly according to still other embodiments of the present application; and
FIG. 14 is a cross-sectional view of the electrode assembly according to still other embodiments of the present application.

Reference numerals: 1 - electrode assembly; 11 - body portion; 12 - tab portion; 13 - cladding layer; 131 - first cladding portion; 132 - second cladding portion; 133 - first extension portion; 134 - third extension portion; 135 - covering portion; 14 - electrode sheet; 14a - first electrode sheet; 14b - second electrode sheet; 141 - active material region; 1411 - first body region; 1412 - first thinned region; 1413 - second body region; 1414 - second thinned region; 1415 - active material detachment region; 142 - inactive material region; 143 - bending portion; 15 - separator; 151 - second extension portion; 152 - fourth extension portion; 16 - first accommodating gap; 161 - first separation gap; 17 - second accommodating gap; 171 - second separation gap; 2 - shell; 21 - shell body; 22 - end cover; 3 - electrode terminal; 10 - battery cell; 20 - box; 20a - first portion; 20b - second portion; 100 - battery; 200 - controller; 300 - motor; 1000 - vehicle; X - length direction; Y - width direction; Z - stacking direction.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. This phrase appearing in various places of the description does not necessarily refer to the same embodiment, nor is an independent or alternative embodiment mutually exclusive with other embodiments.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolyte, and the electrode assembly is composed of a positive electrode sheet, a negative electrode sheet and a separator. The battery cell mainly relies on movement of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and the positive electrode active material may be lithium cobalate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative tab. A material of the negative electrode current collector may be copper, and the negative electrode active material may be carbon, silicon, or the like. In order to ensure that no fusing occurs when high current passes through, there is a plurality of positive tabs which are stacked together, and there is a plurality of negative tabs which are stacked together. A material of the separator may be polypropylene (PP), polyethylene (PE), or the like.

The development of battery technology should consider many design factors simultaneously, such as energy density, cycle life, discharge capacity, charge and discharge rate, and other performance parameters. In addition, safety of the battery should also be considered.

The inventor noticed, for ordinary battery cells, accidents such as explosion and fire occur sometimes due to internal short circuits within the battery cells. The inventor found, for stacked batteries, electrode sheets are generally formed by cutting, burrs are generated at edges of the formed electrode sheets, and the burrs easily puncture a separator, resulting in short circuits between positive and negative electrodes and safety accidents.

In view of this, an embodiment of the present application provides an electrode assembly. The electrode assembly includes a cladding layer, a plurality of stacked electrode sheets, and a separator disposed between the two adjacent electrode sheets. The electrode sheet includes an active material region and an inactive material region, the active material regions of the plurality of electrode sheets and the separator are stacked to form a body portion, and the inactive material regions of the plurality of electrode sheets are stacked to form a tab portion protruding from the body portion. The cladding layer at least clads a circumference of the body portion to cover an edge of the active material region.

In such an electrode assembly, the cladding layer clads the circumference of the body portion to cover the edge of the active material region of the electrode sheet, thereby cladding burrs on the edge of the active material region, reducing the risk of short circuits between positive and negative electrodes due to puncture of the separator by the burrs, and effectively improving the safety of a battery cell.

The technical solution described in this embodiment of the present application is applicable to batteries and electrical devices using batteries.

The electrical devices may be vehicles, mobile phones, portable devices, notebook computers, ships, spacecrafts, electric toys, electric tools, and the like. The vehicles may be oil-fueled vehicles, gas-fueled vehicles, or new energy vehicles, and the new energy vehicles may be battery electric vehicles, hybrid electric vehicles, extended range vehicles, or the like; the spacecrafts include airplanes, rockets, space shuttles, spaceships, and the like; the electric toys include fixed or mobile electric toys, such as game consoles, electric car toys, electric boat toys, and electric plane toys; and the electric tools include electric metal cutting tools, electric grinding tools, electric assembly tools, and railway electric tools, such as electric drills, electric grinders, electric wrenches, electric screwdrivers, electric hammers, electric impact drills, concrete vibrators, and electric planers. The embodiments of the present application do not impose special limitations on the foregoing electrical devices.

For convenient description, the following embodiments are described by an example of a vehicle as an electrical device.

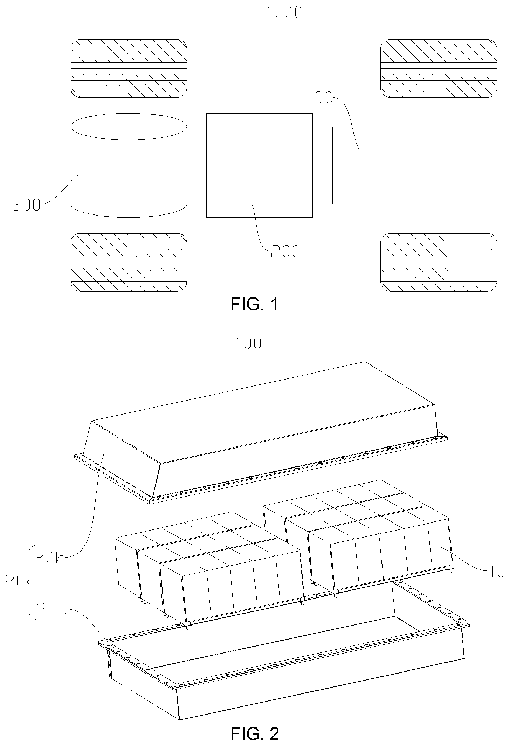

Refer to FIG. 1. FIG. 1 is a schematic structural diagram of a vehicle 1000 according to some embodiments of the present application. A battery 100 is disposed inside the vehicle 1000, and the battery 100 may be disposed at a bottom, head or tail of the vehicle 1000. The battery 100 may be configured to supply power to the vehicle 1000. For example, the battery 100 may be used as an operation power supply of the vehicle 1000.

The vehicle 1000 may further include a controller 200 and a motor 300. The controller 200 is used to control the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referto FIG. 2. FIG. 2 is an exploded view of a battery 100 according to some embodiments of the present application. The battery cell 100 includes battery cells 10 and a box 20, where the box 20 is used for accommodating the battery cells 10.

The box 20 is a component that accommodates the battery cells 10, the box 20 provides a space for the battery cells 10, and the box 20 may have various structures. In some embodiments, the box 20 may include a first portion 20a and a second portion 20b, and the first portion 20a and the second portion 20b cover each other to confine the space for accommodating the battery cells 10. The first portion 20a and the second portion 20b may be in various shapes, such as cuboid or cylindrical. The first portion 20a may be of a hollow structure with an open side, the second portion 20b may also be of a hollow structure with an open side, and the open side of the second portion 20b covers the open side of the first portion 20a to form the box 20 with the accommodating space. Alternatively, the first portion 20a is of a hollow structure with an open side, the second portion 20b is of a plate-like structure, and the second portion 20b covers the open side of the first portion 20a to form the box 20 with the accommodating space. The first portion 20a and the second portion 20b may be sealed through a sealing element, which may be a sealing ring, a sealant, or the like.

There may be one or more battery cells 10 in the battery 100. If there is a plurality of battery cells 10, the plurality of battery cells 10 may be in series connection, parallel connection or series-parallel connection. The series-parallel connection refers to a combination of series connection and parallel connection in the plurality of battery cells 10. The plurality of battery cells 10 may first be connected in series, in parallel or in series and parallel to form a battery module, and then a plurality of battery modules may be connected in series, in parallel, or in series and parallel to form a whole accommodated in the box 20. Alternatively, all the battery cells 10 may be directly connected in series, in parallel, or in series and parallel together, and then the whole formed by all the battery cells 10 is accommodated in the box 20.

In some embodiments, the battery 100 may further include a current collecting component, and the plurality of battery cells 10 may be electrically connected through the current collecting component to implement the series, parallel, or series-parallel connection of the plurality of battery cells 10. The current collecting component may be a metal conductor, such as copper, iron, aluminum, stainless steel, or aluminum alloy.

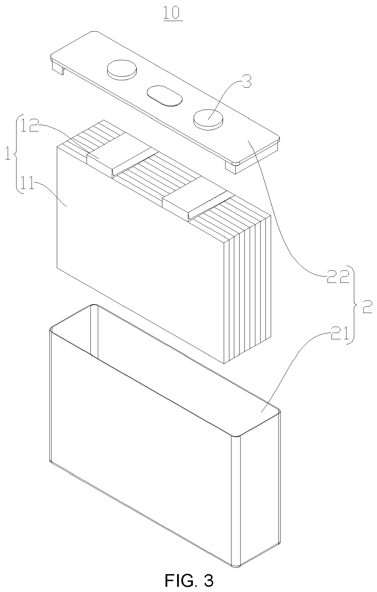

Refer to FIG. 3. FIG. 3 is an exploded view of a battery cell 10 according to some embodiments of the present application. The battery cell 10 includes an electrode assembly 1 and a shell 2.

A sealed space used for accommodating an electrolyte of the electrode assembly 1 is formed inside the shell 2. The shell 2 may include a shell body 21 and an end cover 22, the shell body 21 has an opening, the end cover 22 covers the opening of the shell body 21, and the end cover 22 and the shell body 21 jointly confine the sealed space.

The shell body 21 may be of a hollow structure with an opening formed at one end, or the shell body 21 may be of a hollow structure with openings formed at two opposite ends. The shell body 21 may be in various shapes, such as cylindrical or cuboid. A material of the shell body 21 may be various, such as copper, iron, aluminum, steel, or aluminum alloy.

The end cover 22 is a component that covers the opening of the shell body 21 to isolate an internal environment of the battery cell 10 from an external environment. A shape of the end cover 22 may be adapted to that of the shell body 21. For example, the shell body 21 is of a cuboid structure, and the end cover 22 is of a rectangular plate structure adapted to the shell body 21. For another example, the shell body 21 is of a cylindrical structure, and the end cover 22 is of a circular plate structure adapted to the shell body 21. A material of the end cover 22 may also be various, such as copper, iron, aluminum, steel, or aluminum alloy. The material of the end cover 22 may be the same as or different from that of the shell body 21.

There may be one or two end covers 22 in the shell 2. In the embodiment where the shell body 21 is of a hollow structure with openings formed at two ends, two end covers 22 may be disposed correspondingly, the two end covers 22 cover the two openings of the shell body 21 separately, and the two end covers 22 together with the shell body 21 confine the sealed space. As shown in FIG. 3, in the embodiment where the shell body 21 is of a hollow structure with an opening formed at one end, one end cover 22 may be disposed correspondingly, the end cover 22 covers the opening at one end of the shell body 21, and the end cover 22 and the shell body 21 jointly confine the sealed space.

The electrode assembly 1 is a component that undergoes electrochemical reactions in the battery cell 10. The electrode assembly 1 may include a body portion 11 and a tab portion 12 protruding from the body portion 11. One or more electrode assemblies 1 are located inside the shell body 21.

In some embodiments, the battery cell 10 may further include an electrode terminal 3, the electrode terminal 3 is disposed on the end cover 22, and the electrode terminal 3 is used for electrical connection with the tab portion 12 of the electrode assembly 1 to output electrical energy of the battery cell 10. The electrode terminal 3 may be directly connected to the tab portion 12, for example, the electrode terminal 3 is directly welded to the tab portion 12. The electrode terminal 3 may alternatively be indirectly connected to the tab portion 12, for example, the electrode terminal 3 is indirectly connected to the tab portion 12 through a current collecting member. The current collecting member may be a metal conductor, such as copper, iron, aluminum, steel, or aluminum alloy.

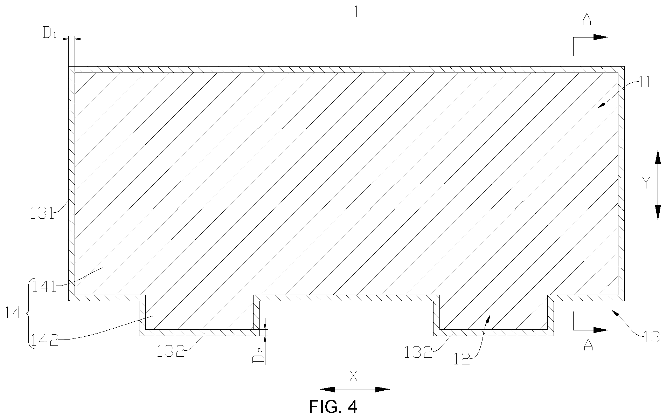

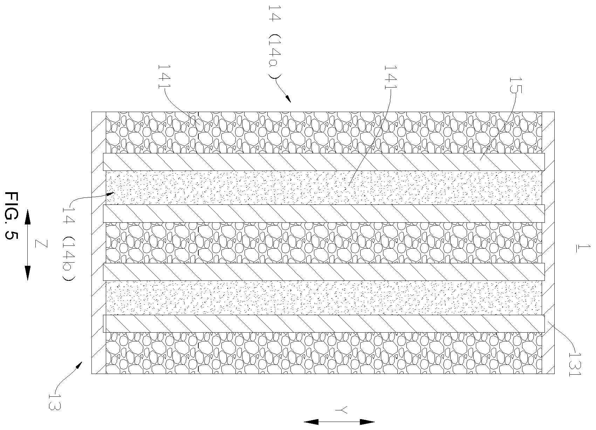

Refer to FIGs. 4 and 5, where FIG. 4 is a schematic structural diagram of an electrode assembly 1 according to some embodiments of the present application; and FIG. 5 is a cross-sectional view taken along line A-A on the electrode assembly 1 shown in FIG. 4. An embodiment of the present application provides an electrode assembly 1, which includes a cladding layer 13, a plurality of stacked electrode sheets 14, and a separator 15 disposed between the two adjacent electrode sheets 14. The electrode sheet 14 includes an active material region 141 and an inactive material region 142, the active material regions 141 of the plurality of electrode sheets 14 and the separator 15 are stacked to form a body portion 11, and the inactive material regions 142 of the plurality of electrode sheets 14 are stacked to form a tab portion 12 protruding from the body portion 11. The cladding layer 13 at least clads a circumference of the body portion 11 to cover an edge of the active material region 141.

Among the plurality of electrode sheets 14, some electrode sheets 14 are positive electrode sheets, while other electrode sheets 14 are negative electrode sheets. The positive electrode sheets and the negative electrode sheets are separated by the separator 15.

In the electrode sheet 14, the active material region 141 is coated with an active material, while the inactive material region 142 is not coated with the active material. The inactive material region 142 may alternatively be referred to as a tab, and the portion of the electrode sheet 14 except the tab is the active material region 141. When the electrode sheet 14 is formed, the tab may be formed by cutting. The active material region 141 of the positive electrode sheet is a positive electrode active material region, and the inactive material region 142 of the positive electrode sheet is a positive electrode inactive material region. The active material region 141 of the negative electrode sheet is a negative electrode active material region, and the inactive material region 142 of the negative electrode sheet is a negative electrode inactive material region.

The body portion 11 is a main body of the electrode assembly 1. The active material regions 141 of all the positive electrode sheets, the active material regions 141 of all the negative electrode sheets, and the separator 15 are stacked to form the body portion 11.

The tab portion 12 is a portion electrically connected to other portions in the electrode assembly 1. For example, in the embodiment where the end cover 22 of the battery cell 10 is provided with an electrode terminal 3, the tab portion 12 is used for electrical connection with the electrode terminal 3. There may be two tab portions 12 in the electrode assembly 1, where one tab portion 12 is a positive tab portion, and the other tab portion 12 is a negative tab portion. The inactive material regions 142 of the plurality of positive electrode sheets may be stacked to form the positive tab portion, while the inactive material regions 142 of the plurality of negative electrode regions may be stacked to form the negative tab portion. The tab portion 12 protrudes from an end portion of the body portion 11. The two tab portions 12 in the electrode assembly 1 may be located at the same end of the body portion 11 in a width direction Y, or at two ends of the body portion 11 in a width direction Y If the two tab portions 12 are located at the same end of the body portion 11 in the width direction Y, the two tab portions 12 may be spaced in a length direction X of the body portion 11.

The cladding layer 13 at least clads the circumference of the body portion 11. It may be understood that at least a portion of the cladding layer 13 clads the circumference of the body portion 11, that is, the cladding layer 13 clads the whole circumference of the body portion 11 in a circumferential direction, or clads a portion of the body portion 11 in a circumferential direction. The circumferential direction is perpendicular to a stacking direction Z of the positive and negative electrode sheets. For example, the body portion 11 is rectangular. If the cladding layer 13 clads a portion of the body portion 11 in the circumferential direction, the cladding layer 13 clads at least one side of the body portion 11. It may be understood that the cladding layer 13 may clad one side of the body portion 11, that is, clad two adjacent or opposite sides of the body portion 11, or clad three adjacent sides of the body portion 11. If the cladding layer 13 clads the whole circumference of the body portion 11 in the circumferential direction, all four sides of the body portion 11 are clad by the cladding layer 13.

After the cladding layer 13 clads the circumference of the body portion 11, the portion of the cladding layer 13 cladding the edge of the active material region 141 of the positive electrode sheet and the portion cladding the edge of the active material region 141 of the negative electrode sheet form an integrated structure.

The cladding layer 13 may clad the circumference of the body portion 11 in various ways. For example, the cladding layer 13 is formed on the circumference of the body portion 11 by injection molding, atomic layer deposition, or the like. For another example, the cladding layer 13 clads the circumference of the body portion 11 by bonding. The cladding layer 13 may be made of an insulating material. In the embodiment where the cladding layer 13 is formed on the circumference of the body portion 11 by atomic layer deposition, the cladding layer 13 may be inorganic oxides of aluminum, zinc, titanium, silicon, zirconium, hafnium, magnesium, or the like, or various inorganic or organic polymer films, or the like. For example, a material of the cladding layer 13 may include at least one of aluminum oxide, silicon oxide, zirconium oxide, hafnium oxide, titanium oxide, magnesium oxide, zinc oxide, boehmite, aluminum hydroxide, magnesium hydroxide, and lithium fluoride. In the embodiment where the cladding layer 13 clads the circumference of the body portion 11 by bonding, a material of the cladding layer 13 may be rubber, plastic, or the like.

In the embodiments of the present application, the cladding layer 13 clads the circumference of the body portion 11 to cover the edge of the active material region 141 of the electrode sheet 14, thereby cladding burrs on the edge of the active material region 141, reducing the risk of short circuits between positive and negative electrodes due to puncture of the separator 15 by the burrs, and effectively improving the safety of a battery cell 10.

In some embodiments, the cladding layer 13 further clads a circumference of the tab portion 12 to cover an edge of the inactive material region 142.

Understandably, the cladding layer 13 has at least two portions, one portion clads the circumference of the body portion 11, and the other portion clads the circumference of the tab portion 12.

For example, the tab portion 12 is quadrilateral. One side of the tab portion 12 overlaps with one side of the body portion 11, the cladding layer 13 may clad at least one of the other three sides of the tab portion 12, that is, the cladding layer 13 may clad one side of the tab portion 12, the cladding layer 13 may alternatively clad two opposite or adjacent sides of the tab portion 12, or the cladding layer 13 may alternatively clad three adjacent sides of the tab portion 12. The tab portion 12 may be of a quadrilateral structure, such as a rectangle or an isosceles trapezoid.

In this embodiment, the cladding portion covers the edge of the inactive material region 142, thereby reducing the risk of short circuits between positive and negative electrodes due to puncture of the separator 15 by burrs at the edge of the inactive material region 142.

In some embodiments, with continued reference to FIG. 4, the cladding layer 13 includes a first cladding portion 131 and a second cladding portion 132. The first cladding portion 131 clads the circumference of the body portion 11 to cover the edge of the active material region 141. The second cladding portion 132 and the first cladding portion 131 jointly enclose a closed structure extending along a closed trajectory, and the second cladding portion 132 clads the circumference of the tab portion 12 to cover the edge of the inactive material region 142.

The first cladding portion 131 is a portion of the cladding layer 13 that clads the circumference of the body portion 11, and the first cladding portion 131 extends along a contour trajectory of the body portion 11 to clad the circumference of the body portion 11. The second cladding portion 132 is of the cladding layer 13 that clads the circumference of the tab portion 12, and the second cladding portion 132 extends along a contour trajectory of the tab portion 12 to clad the circumference of the tab portion 12. The second cladding portion 132 and the first cladding portion 131 jointly enclose a closed structure extending along a closed trajectory, that is, the cladding layer 13 clads the body portion 11 and the tab portion 12 on the circumference as a whole.

In the embodiment where there are two tab portions 12 in the electrode assembly 1, the two tab portions 12 are a positive tab portion and a negative tab portion separately, there are two second cladding portions 132 in the cladding layer 13, the two second cladding portions 132 clad the two tab portions 12 separately, and the first cladding portion 131 and the two second cladding portions 132 jointly enclose a closed structure extending along a closed trajectory.

In this embodiment, the body portion 11 and the tab portions 12 are clad by the first cladding portion 131 and the second cladding portions 132 separately to cover the edges of the active material region 141 and inactive material region 142 of the electrode sheet 14. The second cladding portions 132 and the first cladding portion 131 jointly enclose the closed structure extending along the closed trajectory, so that the cladding layer 13 is less prone to detachment to achieve better protection.

In some embodiments, with continued reference to FIG. 4, the first cladding portion 131 extends along a rectangular trajectory to clad the circumference of the body portion 11.

Understandably, the shape of the first cladding portion 131 matches that of the body portion 11. Because the first cladding portion 131 extends along the rectangular trajectory, the body portion 11 is also of a rectangular structure. The body portion 11 of this structure may be formed by stacking a plurality of electrode sheets 14 with rectangular active material regions 141.

In this embodiment, the first cladding portion 131 extending along the rectangular trajectory can adapt to the rectangular body portion 11, so as to clad the surrounding edges of the active material regions 141.

In some embodiments, with continued reference to FIG. 4, the first cladding portion 131 has a thickness Di of 0.01-100 µm; and/or the second cladding portion 132 has a thickness D₂ of 0.01-100 µm.

The thickness Di of the first cladding portion 131 is a thickness of the first cladding portion 131 protruding from the edge of the body portion 11; and the thickness D₂ of the second cladding portion 132 is a thickness of the second cladding portion 132 protruding from the edge of the tab portion 12. For example, D₁=D₂.

The too thin first cladding portion 131 and second cladding portion 132 may lead to failure of the protection effect; and the too thick first cladding portion 131 and second cladding portion 132 may occupy excessive space inside the battery cell 10 to reduce the energy density of the battery cell 10.

Therefore, in this embodiment, by setting the first cladding portion 131 and/or second cladding portion 132 within an appropriate range, the protection effect will not fail due to the too thin first cladding portion 131 and/or second cladding portion 132, and the energy density of the battery cell 10 will not be affected due to the occupation of excessive space by the too thick first cladding portion 131 and/or second cladding portion 132.

In some embodiments, the first cladding portion 131 and the second cladding portion 132 are integrally formed.

The cladding layer 13 may be formed in various ways to achieve integral forming of the first cladding portion 131 and the second cladding portion 132. For example, the cladding layer 13 is formed by injection molding, atomic layer deposition, or the like to achieve integral forming of the first cladding portion 131 and the second cladding portion 132.

In this embodiment, the first cladding portion 131 and the second cladding portion 132 that are integrally formed have good connecting strength and are not easily separated.

In some embodiments, with continued reference to FIG. 5, the plurality of electrode sheets 14 include a plurality of first electrode sheets 14a and a plurality of second electrode sheets 14b, the first electrode sheets 14a and the second electrode sheets 14b have opposite polarities and are alternated, and the separator is configured to insulate the first electrode sheets 14a and the second electrode sheets 14b. The inactive material regions 142 (not shown in FIG. 5) of the plurality of first electrode sheets 14a are stacked to form one tab portion 12 (not shown in FIG. 5) protruding from the body portion 11, while the inactive material regions 142 (not shown in FIG. 5) of the plurality of second electrode sheets 14b are stacked to form the other tab portion 12 (not shown in FIG. 5) protruding from the body portion 11.

The electrode assembly 1 formed by stacking the plurality of first electrode sheets 14a and the plurality of second electrode sheets 14b is a stacked electrode assembly 1. The first electrode sheets 14a and the second electrode sheets 14b have opposite polarities, which may be understood that the first electrode sheets 14a are positive electrode sheets and the second electrode sheets 14b are negative electrode sheets, or the first electrode sheets 14a are negative electrode sheets and the second electrode sheets 14b are positive electrode sheets. The first electrode sheets 14a and the second electrode sheets 14b are separated by the separator 15. In the electrode assembly 1, there may be one or more separators 15. If there is one separator 15, the separator 15 may form a plurality of separation portions by back-and-forth winding, and a separation portion is disposed between the adjacent first electrode sheet 14a and second electrode sheet 14b. If there is a plurality of separators 15, one separator 15 may be disposed between the adjacent first electrode sheet 14a and second electrode sheet 14b.

The separator 15 may exceed the active material region 141 of the first electrode sheet 14a and the active material region 141 of the second electrode sheet 14b, so that the separator 15 can still well insulate the first electrode sheet 14a and the second electrode sheet 14b in cases of manufacturing errors and thermal shrinkage. For example, the separator 15 exceeds the active material region 141 of the first electrode sheet 14a and the active material region 141 of the second electrode sheet 14b in the length direction X and width direction Y of the body portion 11. In the embodiment where the first cladding portion 131 of the cladding layer clads the circumference of the body portion 11, the portions of the separator 15 that exceed the active material region 141 of the first electrode sheet 14a and the active material region 141 of the second electrode sheet 14b may extend into the first cladding portion 131.

The active material region 141 of the first electrode sheet 14a and the active material region 141 of the second electrode sheet 14b may have the same size or different sizes. For example, the active material region 141 of the first electrode sheet 14a and the active material region 141 of the second electrode sheet 14b are both rectangular, where the active material region 141 of the first electrode sheet 14a is longer than the active material region 141 of the second electrode sheet 14b; and/or the active material region 141 of the first electrode sheet 14a is wider than the active material region 141 of the second electrode sheet 14b.

The electrode assembly 1 provided in this embodiment is a stacked electrode assembly 1, which has advantages of low internal resistance, uniform electric field distribution, and good power performance.

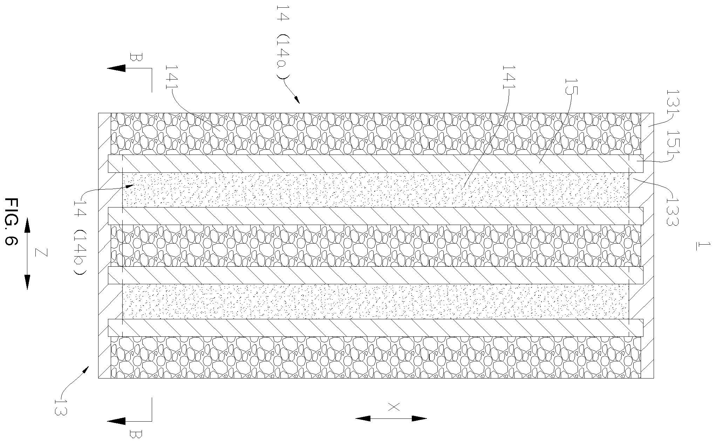

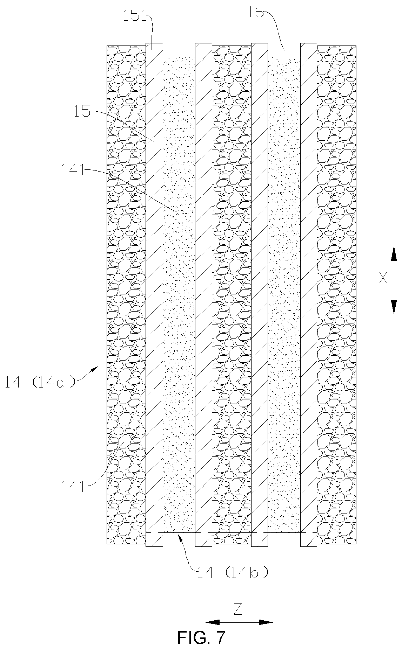

In some embodiments, with reference to FIGs. 6 and 7, where FIG. 6 is a cross-sectional view of the electrode assembly 1 according to some embodiments of the present application; and FIG. 7 is a schematic structural diagram of the electrode assembly 1 shown in FIG. 6 after the cladding layer 13 is removed. The active material region 141 of the first electrode sheet 14a has an excess portion exceeding the edge of the active material region 141 of the second electrode sheet 14b. In the stacking direction Z of the first electrode sheet 14a and the second electrode sheet 14b, a first accommodating gap 16 is formed between two adjacent excess portions. The cladding layer 13 has a first extension portion 133, the first extension portion 133 corresponds to the first accommodating gap 16, and the first extension portion 133 is accommodated in the first accommodating gap 16.

The active material region 141 of the first electrode sheet 14a may have excess portions all around. For example, the active material region 141 of the first electrode sheet 14a has excess portions at two ends of the body portion 11 in the length direction X and at two ends of the body portion 11 in the width direction Y The active material region 141 of the first electrode sheet 14a may alternatively have excess portions at partial circumferential positions. For example, the active material region 141 of the first electrode sheet 14a has excess portions only at two ends of the body portion 11 in the length direction X.

The first extension portion 133 is a portion, accommodated in the first accommodating gap 16, of the cladding layer 13. In the embodiment where the first cladding portion 131 of the cladding layer 13 clads the circumference of the body portion 11, the first extension portion 133 may be connected to the first cladding portion 131, and the first extension portion 133 may be integrally formed with the first cladding portion 131.

For example, the first electrode sheet 14a is a negative electrode sheet, and the second electrode sheet 14b is a positive electrode sheet. Therefore, the active material region 141 of the negative electrode sheet exceeds the edge of the active material region 141 of the positive electrode sheet, which can effectively reduce lithium precipitation.

In this embodiment, the excess portions of the two adjacent first electrode sheets 14a well limit the first extension portion 133, thereby improving firmness of the cladding layer 13 cladding the circumference of the body portion 11.

In some embodiments, with continued reference to FIGs. 6 and 7, in the length direction X of the body portion 11, at least one end of the active material region 141 of the first electrode sheet 14a exceeds the edge of the active material region 141 of the second electrode sheet 14b. In this case, at least one end of the body portion 11 in the length direction X will form a first accommodating gap 16 to accommodate the first extension portion 133 of the cladding layer 13 in the length direction X of the body portion 11.

Understandably, in the length direction X of the body portion 11, one end of the active material region 141 of the first electrode sheet 14a may exceed the edge of the active material region 141 of the second electrode sheet 14b, ortwo ends of the active material region 141 of the first electrode sheet 14a may exceed the edge of the active material region 141 of the second electrode sheet 14b.

For example, in FIGs. 6 and 7, in the length direction X of the body portion 11, two ends of the active material region 141 of the first electrode sheet 14a exceed the edge of the active material region 141 of the second electrode sheet 14b. That is, in the length direction X of the body portion 11, one end of the active material region 141 of the first electrode sheet 14a exceeds the edge of one end of the active material region 141 of the second electrode sheet 14b, and the other end of the active material region 141 of the first electrode sheet 14a exceeds the edge of the other end of the active material region 141 of the second electrode sheet 14b.

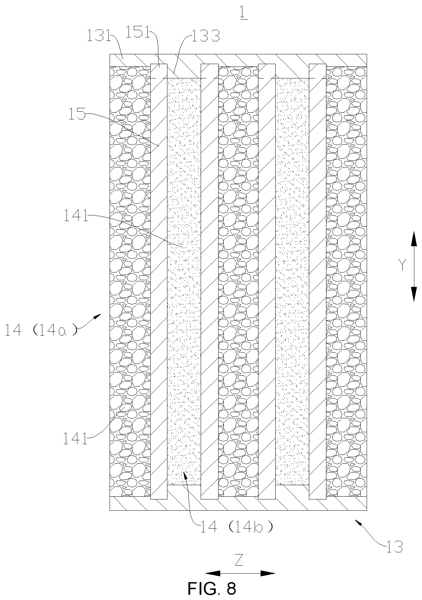

In some embodiments, refer to FIG. 8. FIG. 8 is a cross-sectional view taken along line B-B in FIG. 6. In the width direction Y of the body portion 11, at least one end of the active material region 141 of the first electrode sheet 14a exceeds the edge of the active material region 141 of the second electrode sheet 14b. In this case, at least one end of the body portion 11 in the width direction Y will form a first accommodating gap 16 to accommodate the first extension portion 133 of the cladding layer 13 in the width direction Y of the body portion 11.

Understandably, in the width direction Y of the body portion 11, one end of the active material region 141 of the first electrode sheet 14a may exceed the edge of the active material region 141 of the second electrode sheet 14b, ortwo ends of the active material region 141 of the first electrode sheet 14a may exceed the edge of the active material region 141 of the second electrode sheet 14b.

For example, in FIG. 8, in the width direction Y of the body portion 11, two ends of the active material region 141 of the first electrode sheet 14a exceed the edge of the active material region 141 of the second electrode sheet 14b. That is, in the width direction Y of the body portion 11, one end of the active material region 141 of the first electrode sheet 14a exceeds the edge of one end of the active material region 141 of the second electrode sheet 14b, and the other end of the active material region 141 of the first electrode sheet 14a exceeds the edge of the other end of the active material region 141 of the second electrode sheet 14b.

In some embodiments, with continued reference to FIGs. 6-8, the separator 15 has a second extension portion 151, and the second extension portion 151 is accommodated in the first accommodating gap 16.

The second extension portion 151 is a portion, extending into the first accommodating gap 16, of the separator 15. There may be two second extension portions 151 accommodated in the first accommodating gap 16.

In this embodiment, the portion of the separator 15 (the second extension portion 151) extending into the first accommodating gap 16 enables the separator 15 to better separate the first electrode sheet 14a and the second electrode sheet 14b, so as to reduce the risk of overlap between the first electrode sheet 14a and the second electrode sheet 14b.

In some embodiments, with continued reference to FIGs. 6-8, the first extension portion 133 is located between the two second extension portions 151 in the first accommodating gap 16.

For example, the first extension portion 133 is bonded to a surface of the second extension portion 151, namely, there is adhesion between the first extension portion 133 and the surface of the second extension portion 151. In the embodiment where the cladding layer 13 is formed by injection molding or atomic layer deposition, after the cladding layer 13 is formed, the first extension portion 133 will be bonded to the surface of the second extension portion 151.

In this embodiment, the first extension portion 133 can limit the two second extension portions 151, so the two second extension portions 151 of the separator 15 are less prone to bending or wrinkling in the first accommodating gap 16.

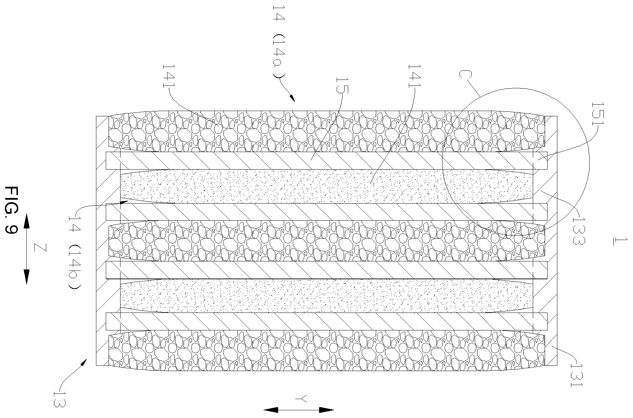

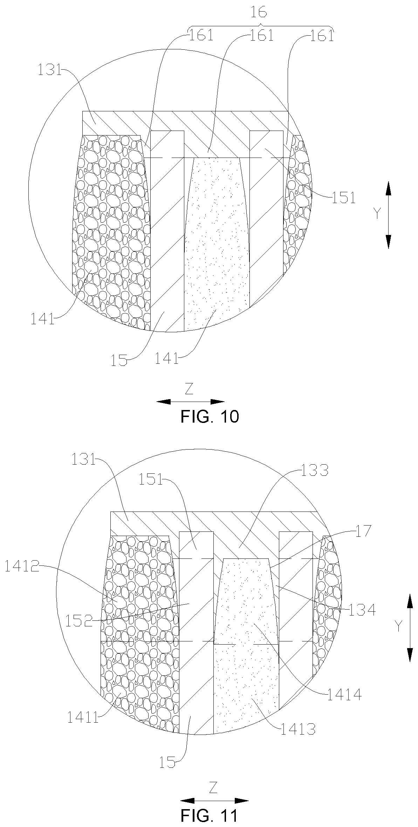

In some embodiments, refer to FIGs. 9 and 10, where FIG. 9 is a cross-sectional view of the electrode assembly 1 according to other embodiments of the present application, and FIG. 10 is a partially enlarged view of position C of the electrode assembly 1 shown in FIG. 9. The two second extension portions 151 in the first accommodating gap 16 separate the first accommodating gap 16 into three first separation gaps 161, the three first separation gaps 161 are spaced in the stacking direction Z of the first electrode sheet 14a and the second electrode sheet 14b, and each of the first separation gaps 161 accommodates a portion of the first extension portion 133.

Understandably, the first extension portion 133 has three portions, which are correspondingly accommodated in the three first separation gaps 161.

For example, the portion, located in the first separation gap 161, of the first extension portion 133 is bonded to the surface of the second extension portion 151, namely, there is adhesion between the portion, located in the first separation gap 161, of the first extension portion 133 and the surface of the second extension portion 151. In the embodiment where the cladding layer 13 is formed by injection molding or atomic layer deposition, after the cladding layer 13 is formed, the portion, located in the first separation gap 161, of the first extension portion 133 will be bonded to the surface of the second extension portion 151.

In this embodiment, the two second extension portions 151 separate the first accommodating gap 16 into three first separation gaps 161, and each of the first separation gaps 161 accommodates a portion of the first extension portion 133. This structure enables the two second extension portions 151 of the separator 15 to be less prone to bending or wrinkling in the first accommodating gap 16. On the other hand, the first extension portion 133 fills the space not occupied by the second extension portions 151 in the first accommodating gap 16, thereby improving the firmness of the cladding layer 13.

In some embodiments, refer to FIG. 11. FIG. 11 is a partially enlarged view of the electrode assembly 1 according to still other embodiments of the present application. The active material region 141 of the first electrode sheet 14a includes a first body region 1411 and a first thinned region 1412, the active material region 141 of the second electrode sheet 14b includes a second body region 1413 and a second thinned region 1414, and in the width direction Y of the body portion 11, the first thinned region 1412 is disposed in at least one end of the first body region 1411, and the second thinned region 1414 is disposed in at least at one end of the second body region 1413. In the stacking direction Z of the first electrode sheet 14a and the second electrode sheet 14b, the first body region 1411 is opposite to the second body region 1413, the first thinned region 1412 is opposite to the second thinned region 1414, and a second accommodating gap 17 is formed between the first thinned region 1412 and the second thinned region 1414. The cladding layer 13 has a third extension portion 134, and the third extension portion 134 is accommodated in the second accommodating gap 17.

The first thinned region 1412 is thinner than the first body region 1411, and the second thinned region 1414 is thinner than the second body region 1413. In the width direction Y of the body portion 11, the first thinned region 1412 may be disposed at one end or two ends of the first body region 1411, and the second thinned region 1414 may be disposed at one end or two ends of the second body region 1413.

The third extension portion 134 is a portion, extending into the second accommodating gap 17, of the cladding layer 13. In the embodiment where the cladding layer 13 has a first extension portion 133, the third extension portion 134 is connected to the first extension portion 133.

In this embodiment, the first thinned region 1412 of the first electrode sheet 14a and the second thinned region 1414 of the second electrode sheet 14b both well limit the third extension portion 134, thereby improving the firmness of the cladding layer 13 cladding the circumference of the body portion 11.

In some embodiments, with continued reference to FIG. 11, the separator 15 has a fourth extension portion 152, and the fourth extension portion 152 is accommodated in the second accommodating gap 17.

The fourth extension portion 152 is a portion, extending into the second accommodating gap 17, of the separator 15. In the embodiment where the separator 15 has a second extension portion 151, the second extension portion 151 is connected to the fourth extension portion 152 in the width direction Y of the body portion 11.

In this embodiment, the separator 15 can better separate the first electrode sheet 14a and the second electrode sheet 14b, thereby reducing the risk of overlap between the first electrode sheet 14a and the second electrode sheet 14b.

In some embodiments, with continued reference to FIG. 11, the third extension portion 134 is located between the fourth extension portion 152 and the second thinned region 1414.

It should be noted that, in this embodiment, the polarity of the second electrode sheet 14b is not limited, that is, the second electrode sheet 14b may be either a positive electrode sheet or a negative electrode sheet. If the second electrode sheet 14b is a positive electrode sheet, the third extension portion 134 is located between the fourth extension portion 152 and the second thinned region 1414 of the positive electrode sheet; or if the second electrode sheet 14b is a negative electrode sheet, the second extension portion 151 is located between the fourth extension portion 152 and the second thinned region 1414 of the negative electrode sheet.

For example, in the stacking direction Z of the first electrode sheet 14a and the second electrode sheet 14b, the gap between the fourth extension portion 152 and the second thinned region 1414 is greater than the gap between the fourth extension portion 152 and the first thinned region 1412. In the embodiment where the cladding layer 13 is formed by injection molding or atomic layer deposition, because the gap between the fourth extension portion 152 and the first thinned region 1412 is small, in the process of forming the cladding layer 13, the material may not enter the gap between the fourth extension portion 152 and the first thinned region 1412, but may enter the gap between the fourth extension portion 152 and the second thinned region 1414, so that the third extension portion 134 is formed in the gap between the fourth extension portion 152 and the second thinned region 1414.

In this embodiment, the third extension portion 134 limits the fourth extension portion 152, so the fourth extension portion 152 is less prone to bending or wrinkling in the second accommodating gap 17.

In other embodiments, the third extension portion 134 may alternatively be located only between the fourth extension portion 152 and the first thinned region 1412.

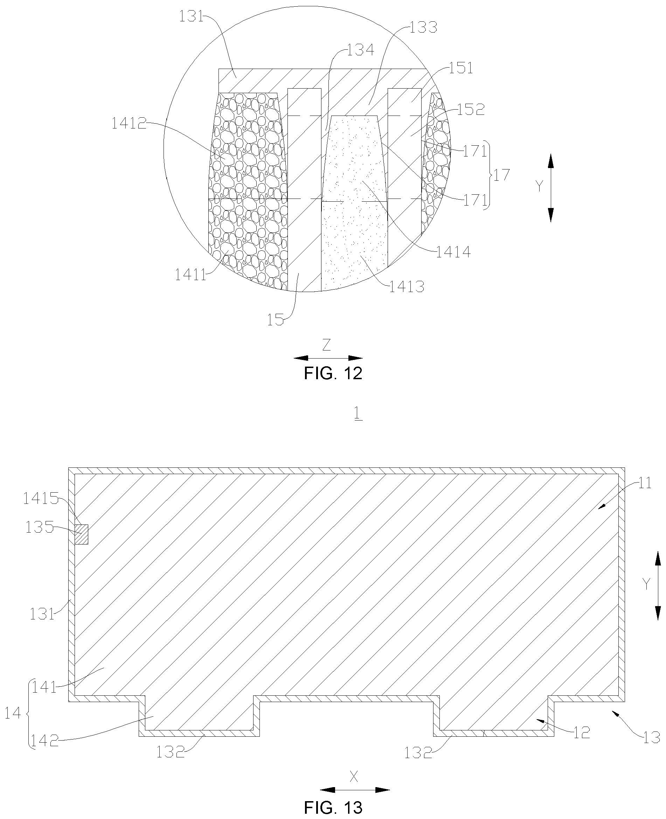

In some embodiments, refer to FIG. 12. FIG. 12 is a partially enlarged view of the electrode assembly 1 according to still other embodiments of the present application. The fourth extension portion 152 separates the second accommodating gap 17 into two second separation gaps 171, the two second separation gaps 171 are spaced in the stacking direction Z of the first electrode sheet 14a and the second electrode sheet 14b, and each of the second separation gaps 171 accommodates a portion of the third extension portion 134.

Understandably, the third extension portion 134 has two portions, which are located in the two second separation gaps 171 separately. In the two second separation gaps 171 of the second accommodating gap 17, one second separation gap 171 is the gap between the fourth extension portion 152 and the first thinned region 1412, and the other second separation gap 171 is the gap between the fourth extension portion 152 and the second thinned region 1414.

In the embodiment where the cladding layer 13 is formed by injection molding or atomic layer deposition, the material may enter the two second separation gaps 171 in the process of forming the cladding layer 13, so that the two portions of the third extension portion 134 are formed in the two second separation gaps 171 separately.

In this embodiment, the fourth extension portion 152 separates the second accommodating gap 17 into two second separation gaps 171, and each of the second separation gaps 171 accommodates a portion of the third extension portion 134. This structure enables the fourth extension portion 152 of the separator 15 to be less prone to bending or wrinkling in the second accommodating gap. On the other hand, the third extension portion 134 fills the space not occupied by the fourth extension portion 152 of the separator 15 in the second accommodating gap 17, thereby improving the firmness of the cladding layer 13 cladding the circumference of the body portion 11.

In some embodiments, refer to FIG. 13. FIG. 13 is a schematic structural diagram of the electrode assembly 1 according to still other embodiments of the present application. The active material region 141 has an active material detachment region 1415, and the active material detachment region 1415 is close to the edge of the active material region 141. The cladding layer 13 includes a covering portion 135, and the covering portion 135 covers the active material detachment region 1415.

In the embodiment where the body portion 11 is clad by the first cladding portion 131 of the cladding layer 13, the covering portion 135 may be connected to the first cladding portion 131, and the covering portion 135 may be integrally formed with the first cladding portion 131.

When the electrode sheet 14 is formed by cutting, the active material is prone to detachment near the edge of the active material region 141, and the active material detachment region 1415 is formed near the edge of the active material region 141, so that a base material is partially exposed in the active material region 141.

Therefore, in this embodiment, the active material detachment region 1415 is covered by the covering portion 135 to avoid the exposure of the base material in the active material region 141.

In some embodiments, the cladding layer 13 is made of an insulating material. The cladding layer 13 has insulation performance to reduce the risk of short circuits between positive and negative electrodes in the presence of the cladding layer 13.

Further, the cladding layer 13 is an inorganic cladding layer or a composite cladding layer containing an inorganic material.

A material of the inorganic cladding layer is inorganic, and the composite cladding layer may be formed by inorganic-organic hybridization, organic-inorganic hybridization, or the like.

In some embodiments, as shown in FIGs. 5-9, in the stacking direction Z of the first electrode sheets 14a and the second electrode sheets 14b, the two adjacent first electrode sheets 14a may be independent of each other, the two adjacent first electrode sheets 14a are not connected, the two adjacent second electrode sheets 14b may also be independent of each other, and the two adjacent second electrode sheets 14b are also not connected.

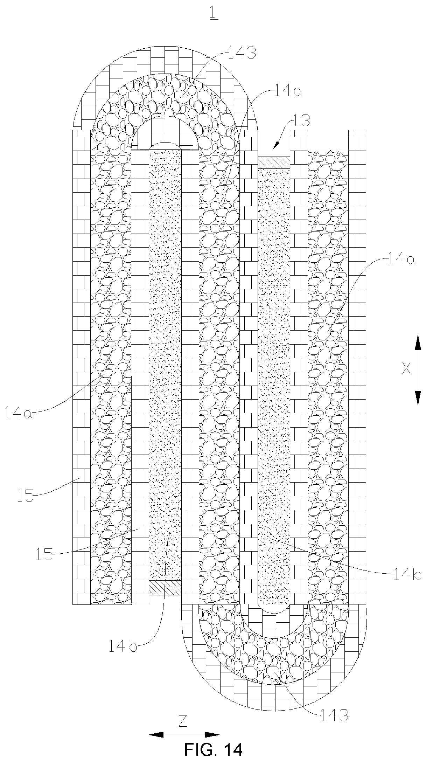

In other embodiments, refer to FIG. 14. FIG. 14 is a cross-sectional view of the electrode assembly 1 according to still other embodiments of the present application. In the stacking direction Z of the first electrode sheets 14a and the second electrode sheets 14b, the two adjacent first electrode sheets 14a are connected through a bending portion 143, so that all the first electrode sheets 14a and all the bending portions 143 jointly form a back-and-forth bending sheet structure. The bending portion 143 is located at one end of the first electrode sheet 14a in the length direction X of the body portion 11.

For example, the first electrode sheet 14a is a negative electrode sheet, and the second electrode sheet 14b is a positive electrode sheet.

Taking the rectangular body portion 11 as an example, the cladding layer 13 may cover the active material region 141 of the first electrode sheet 14a and the edges of the active material region 141 of the second electrode sheet 14b at two ends in the width direction Y of the body portion 11 (not shown in FIG. 13), and the cladding layer 13 may also cover the edge of the active material region 141 of the second electrode sheet 14b at one end not covered by the bending portion 143 in the length direction X.

An embodiment of the present application provides a battery cell 10, including a shell 2 and the electrode assembly 1 provided by any of the foregoing embodiments, where the electrode assembly 1 is accommodated in the shell 2.

An embodiment of the present application provides a battery 100, including a box 20 and the battery cell 10 provided by any of the foregoing embodiments, where the battery cell 10 is accommodated in the box 20.

Moreover, an embodiment of the present application provides an electrical device, including the battery 100 provided by any of the foregoing embodiments.

The electrical device may be any of the foregoing devices using the battery 100.

It should be noted that the embodiments in the present application and the features of the embodiments may be combined with each other on a non-conflict basis.

The foregoing embodiments are merely used for illustrating the technical solutions of the present application and are not intended to limit the present application. Various modifications and variations may be made to the present application for those skilled in the art. Any modifications, equivalent substitutions, improvements, and the like made within the spirit and principle of the present application shall fall within the protection scope of the present application.

## Claims

1. An electrode assembly, comprising:
a plurality of stacked electrode sheets and a separator disposed between two adjacent electrode sheets, wherein each of the electrode sheets comprises an active material region and an inactive material region, active material regions of the plurality of electrode sheets and the separator are stacked to form a body portion, and inactive material regions of the plurality of electrode sheets are stacked to form a tab portion protruding from the body portion; and
a cladding layer, at least cladding a circumference of the body portion to cover an edge of the active material region.

2. The electrode assembly according to claim 1, wherein the cladding layer further clads a circumference of the tab portion to cover an edge of the inactive material region.

3. The electrode assembly according to claim 2, wherein the cladding layer comprises:
a first cladding portion, cladding the circumference of the body portion to cover the edge of the active material region; and
a second cladding portion, enclosing, together with the first cladding portion, a closed structure extending along a closed trajectory, wherein the second cladding portion clads the circumference of the tab portion to cover the edge of the inactive material region.

4. The electrode assembly according to claim 3, wherein the first cladding portion has a thickness of 0.01-100 µm; and/or the second cladding portion has a thickness of 0.01-100 µm.

5. The electrode assembly according to claim 3 or 4, wherein the first cladding portion and the second cladding portion are integrally formed.

6. The electrode assembly according to any one of claims 1-5, wherein the plurality of electrode sheets comprise a plurality of first electrode sheets and a plurality of second electrode sheets, the first electrode sheets and the second electrode sheets have opposite polarities and are alternated, and the separator is configured to insulate the first electrode sheets and the second electrode sheets; and
inactive material regions of the plurality of first electrode sheets are stacked to form one tab portion protruding from the body portion, while inactive material regions of the plurality of second electrode sheets are stacked to form the other tab portion protruding from the body portion.

7. The electrode assembly according to claim 6, wherein active material regions of the first electrode sheets each have an excess portion exceeding an edge of active material regions of the second electrode sheets;
in a stacking direction of the first electrode sheets and the second electrode sheets, a first accommodating gap is formed between two adjacent excess portions; and
the cladding layer has a first extension portion, the first extension portion corresponds to the first accommodating gap, and the first extension portion is accommodated in the first accommodating gap.

8. The electrode assembly according to claim 7, wherein in a length direction of the body portion, at least one end of the active material regions of the first electrode sheets exceeds the edge of the active material regions of the second electrode sheets.

9. The electrode assembly according to claim 7 or 8, wherein in a width direction of the body portion, at least one end of the active material regions of the first electrode sheets exceeds the edge of the active material regions of the second electrode sheets.

10. The electrode assembly according to any one of claims 7-9, wherein the separator has a second extension portion, and the second extension portion is accommodated in the first accommodating gap.

11. The electrode assembly according to claim 10, wherein the first extension portion is located between two second extension portions in the first accommodating gap.

12. The electrode assembly according to claim 10, wherein two second extension portions in the first accommodating gap separate the first accommodating gap into three first separation gaps, the three first separation gaps are spaced in a stacking direction of the first electrode sheets and the second electrode sheets, and each of the first separation gaps accommodates a portion of the first extension portion.

13. The electrode assembly according to any one of claims 6-12, wherein active material regions of the first electrode sheets each comprise a first body region and a first thinned region, active material regions of the second electrode sheets each comprise a second body region and a second thinned region, and in a width direction of the body portion, the first thinned region is disposed in at least one end of the first body region, and the second thinned region is disposed in at least at one end of the second body region;
in a stacking direction of the first electrode sheets and the second electrode sheets, the first body region is opposite to the second body region, the first thinned region is opposite to the second thinned region, and a second accommodating gap is formed between the first thinned region and the second thinned region; and
the cladding layer has a third extension portion, and the third extension portion is accommodated in the second accommodating gap.

14. The electrode assembly according to claim 13, wherein the separator has a fourth extension portion, and the fourth extension portion is accommodated in the second accommodating gap.

15. The electrode assembly according to claim 14, wherein the third extension portion is located between the fourth extension portion and the second thinned region.

16. The electrode assembly according to claim 14, wherein the fourth extension portion separates the second accommodating gap into two second separation gaps, the two second separation gaps are spaced in the stacking direction of the first electrode sheets and the second electrode sheets, and each of the second separation gaps accommodates a portion of the third extension portion.

17. The electrode assembly according to any one of claims 1-16, wherein the active material region has an active material detachment region, which is close to an edge of the active material region; and the cladding layer comprises a covering portion, which covers the active material detachment region.

18. The electrode assembly according to any one of claims 1-17, wherein the cladding layer is made of an insulating material.

19. The electrode assembly according to any one of claims 1-18, wherein the cladding layer is an inorganic cladding layer or a composite cladding layer containing an inorganic material.

20. A battery cell, comprising:
a shell; and
the electrode assembly according to any one of claims 1-19, wherein the electrode assembly is accommodated in the shell.

21. A battery, comprising:
a box; and
the battery cell according to claim 20, wherein the battery cell is accommodated in the box.

22. An electrical device, comprising the battery according to claim 21.
